# EUROPÄISCHE PATENTSCHRIFT

(11) **EP 0 929 835 B1**
(45) Veröffentlichungstag und Bekanntmachung des Hinweises auf die Patenterteilung: **13.11.2002**
(21) Anmeldenummer: 97944844.6
(22) Anmeldetag: 06.09.1997
(51) Int. Cl.: G02B 23/16, G02B 7/182

(54) **THERMALKOMPENSATION FÜR EINE HYDRAULISCHE LAGERZELLE, IHR EINSATZ IN EINER LATERALLAGERUNG UND GEEIGNETE LAGERZELLE**
THERMAL COMPENSATION DEVICE FOR A HYDRAULIC STORAGE CELL, ITS USE IN A LATERAL STORAGE AND APPROPRIATE STORAGE CELLS
DISPOSITIF DE COMPENSATION THERMIQUE POUR UNE CELLULE DE STOCKAGE HYDRAULIQUE, SON UTILISATION DANS UN SYSTEME DE MONTAGE LATERAL ET CELLULE DE STOCKAGE APPROPRIE

(30) Priorität: 30.09.1996 DE 19640204
(43) Veröffentlichungstag der Anmeldung: 21.07.1999
(73) Patentinhaber: Carl Zeiss, 89518 Heidenheim (Brenz) (DE)
(72) Erfinder: MEIER, Hans-Jürgen, D-73431 Aalen (DE)
(74) Vertreter: Gnatzig, Klaus
(86) Internationale Anmeldenummer: EP9704853
(87) Internationale Veröffentlichungsnummer: WO98014817

(56) Entgegenhaltungen:
- DE-A- 3 121 961
- DE-C- 4 319 453
- US-A- 4 757 982
- US-A- 5 074 654
- US-A- 5 151 809

## Beschreibung

Die Erfindung betrifft eine hydraulische Lagerzelle nach den Oberbegriffen der Ansprüche 1 und 4 und den Einsatz einer derartigen Lagerzelle zur Laterallagerung und Axiallagerung.

Unter Thermalkompensation von Lagerzellen wurde bisher lediglich eine Vorrichtung verstanden, welche eine Erhöhung des Öldruckes im Gesamtsystem infolge Temperaturerhöhung begrenzt. Eine thermisch verursachte Verschiebung z.B. eines Hauptspiegels bei einem Spiegelteleskop wurde in Kauf genommen und ggf. durch Fokussieren des Fangspiegels oder durch Nachjustierung des Hauptspiegels ausgeglichen.

Bekannte Laterallagerungen mit Lagerzellen, die direkt in der Wirkungslinie der Spiegelschwerebene liegen, kommen ohne Umlenkungen durch Hebel aus, können aber meist nur am Außenrand eines Spiegels verwendet werden.

Durch Verwendung eines Hebels kann die Wirkungsebene der Lateralkraft jedoch zur Rückseite des Spiegels verschoben werden, falls ein Hebel mit einem festen Drehpunkt zur Kraftumlenkung verwendet wird.

Alle drei Punkte eines solchen Umlenkhebels sollen frei sein von Reibungskräften und möglichst arm an winkelabhängigen Rückstellkräften. Da außerdem die laterale Steifigkeit insbesondere des mittleren Gelenkes sehr hoch sein soll, widersprechen sich die gestellten Anforderungen teilweise und lassen scheinbar nur noch Kompromißlösungen zu.

Hydraulische Kompensationszellen (Lagerzellen) sind z.B. aus der europäischen Patentanmeldung EP 0 270 967 oder aus den amerikanischen Patenten US 4,775,230 und US 5,151,809 bekannt. In diesen bekannten hydraulischen Lagerzellen ist eine mittlere Membran vorhanden, oberhalb derer die Arbeitskammer ausgebildet ist und unterhalb derer die Kompensationskammer für den hydrostatischen Druckanteil liegt. Jede der beiden Kammern besitzt eine kleinere zentrale Öffnung mit Dichtung auf der, der mittleren Membran entgegengesetzten Seite. Die beiden Kammern sind symmetrisch an den beiden sich gegenüberliegenden Seiten der mittleren Membran aufgebaut, um gleiche hydraulische Flächen in beiden Kammern zu erhalten.

Obwohl eine solche Zelle drei Dichtsysteme in Form von Membranen (Ebenen- oder Rollmembranen) aufweist, ist ihre seitliche Belastbarkeit so gering, daß auf ein laterales Führungssystem nur selten verzichtet werden kann. Rollmembranen haben außerdem unerwünscht große Reibwerte und Federkräfte und werden bei sehr tiefen Temperaturen oft zu hart.

Aus der US-A 5 074 654 ist eine hydraulische Aktuatorzelle bekannt, die zwei koaxial zueinander angeordnete Hydraulikkammern mit jeweils einem die jeweilige Kammer nach außen hin abschließenden Kolben aufweist. Diese beiden äußeren Kolben sind außerhalb der Kammern miteinander verbunden. Im Inneren weist jede der Kammern einen Stellkolben zwischen den Stellkolben und den äußeren Kolben ein Hydraulikmedium fest definierter Menge auf. Eine Kompensation hydrostatischer Druckänderungen ist hier nicht vorgesehen.

Aus der DE-A1 36 42 128 ist eine Lagerzelle bekannt, die eine Aktuatorzelle mit zwei koaxial zueinander angeordneten Kammern und in jede der beiden Kammern jeweils einen Kolben aufweist. Eine Kompensation hydrostatischer Druckänderungen ist auch hier nicht vorgesehen.

Es ist die Aufgabe der vorliegenden Erfindung, eine hydraulische Lagerzelle zu schaffen, die eine kleine Federsteifigkeit aufweist. Außerdem sollen bei der Lagerzelle thermisch bedingte Volumenänderungen des Hydraulikmediums unter Ausnutzung des Ausgleichsystems für den hydrostatischen Druck kompensierbar sein.

Diese Aufgabe wird erfüllt durch die Merkmale der Ansprüche 1 und 4.

Der Einsatz der erfindungsgemäßen Lagerzelle als Laterallagerung erlaubt es, einen Umlenkhebel durch hydraulische Zellen so zu lagern, daß eine Bewegung parallel zu sich selbst erfolgen kann.

Die hydraulische Lagerzelle nach Anspruch 4 besitzt eine möglichst kleine Federsteifigkeit und erlaubt es, gegenüber dem Stand der Technik auf eine Membran zu verzichten. Gegenüber den bekannten hydraulischen Lagerzellen weist die erfindungsgemäße Lagerzelle zudem ein verbessertes laterales Führungsverhalten auf.

Die erfindungsgemäße Lagerzelle besitzt eine Arbeits- und eine Kompensationskammer mit gleichen hydraulischen Querschnitt, ohne daß zwischen den beiden Kammern eine Dichtung angeordnet ist.

Dazu werden die beiden Kammern spiegelbildlich zu einer sie trennenden, unelastischen Grundplatte der Zellen angeordnet, aber nicht wie seither üblich in der zentralen Achse verbunden, sondern durch mindestens eine externe Umgriffbrücke außen um die beiden Kammern herum.

Das Prinzip ist auch vorteilhaft anwendbar für Metallbalge als Dichtungen oder herkömmliche Membranen.

Die Dichtungsmembran kann als ein metallische Torus in Form eines Omegas gebildet werden. Das hat gegenüber einem Rollmembran den Vorteil, daß der feststehende Durchmesser und der bewegliche Durchmesser der Dichtungsmembran nahezu gleich groß sind.

Gegenüber einer Flachmembran ist die walkbare Fläche um Faktoren größer, ohne daß dabei eine wesentliche Verringerung der hydraulischen Zellensteifigkeit eintritt. Die mechanische Steifigkeit der Zelle (ohne Hydroflüssigkeit) soll dagegen so klein wie nur möglich sein.

Ein Omega-Torus hat eine besonders flache Federkennlinie, die linear durch den Ursprung geht.

Werden oberhalb und unterhalb der Zelle je drei Omega-Blattfedern angeordnet, welche bei ihrer Montage zusammengedrückt werden, so wird in der mittleren Lage die maximale Federenergie gespeichert. Sowohl bei Auslenkung nach oben als auch nach unten geben die Omega-Blattfedern Energie ab.

Ohne den Omega-Torus würde das System von einer Endlage in die andere schnappen, wie ein Schalter. Die Omega-Blattfedern haben im Ursprung eine negative Federkennlinie, die durch die Formgebung der Feder so gewählt wird, daß sich für das Gesamtsystem eine noch wesentlich flachere Kennlinie ergibt als ohne die Federn. Die Omega-Blattfedern übernehmen gleichzeitig die seitliche Führung des beweglichen Teils der Zelle, wodurch ein zusätzliches laterales Führungselement eingespart wird.

Weitere vorteilhafte Ausgestaltungen der Erfindung sind in den Unteransprüchen beschrieben.

Die Erfindung wird im folgenden in beispielhafterweise anhand von Zeichnungen erläutert, wobei weitere wesentliche Merkmale sowie dem besseren Verständnis dienende Erläuterungen und Ausgestaltungsmöglichkeiten des Erfindungsgedankens beschrieben sind.

Dabei zeigen:
- Figur 1: eine schematische Darstellung der neuen erfindungsgemäßen Kompensationszelle;
- Figur 2: eine Lagerzelle nach dem bekannten Stand der Technik;
- Figur 3: eine Realisierungsform der erfindungsgemäßen Lagerzelle im seitlichen Schnitt; und
- Figur 4: eine Aufsicht auf die Lagerzelle aus Figur 3.
- Figur 5: eine Thermalkompensation unter Verwendung der erfindungsgemäßen Lagerzelle;
- Figur 6: eine hydraulische Laterallagerung als Parallelführung unter Verwendung der erfindungsgemäßen Lagerzelle; und
- Figur 7: ein Gelenk für die in Figur 6 dargestellte hydraulische Laterallagerung.

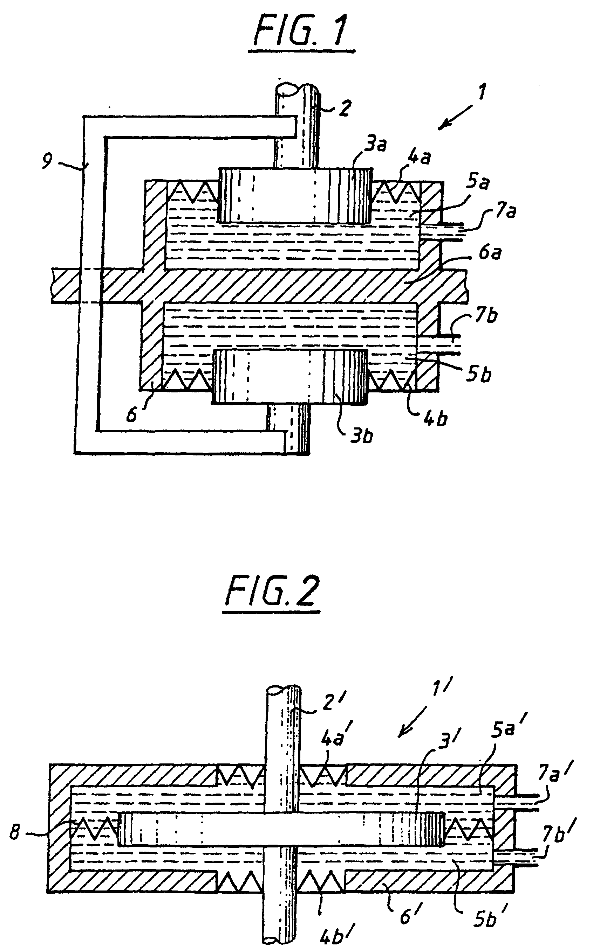

Die in der Figur 2 dargestellte Lagerzelle (1') ist eine hydraulische Lagerzelle nach dem Stand der Technik. Die hydraulische Flüssigkeit ist in einem Gehäuse (6') untergebracht, welches durch eine Dichtung (8) und eine Trennscheibe (3') in zwei Kammern (5a', 5b') unterteilt ist. Diese Lagerzelle (1') ist detailliert in der DE 3642128 beschrieben.

Die obere Kammer ist die Arbeitskammer (5a') und die untere Kammer ist die Kompensationskammer (5b'). Zu beiden Kammern (5a', 5b') führt jeweils eine Zuführungs- bzw. Verbindungsleitung (7a', 7b') für hydraulische Flüssigkeiten, welche mit den Kammern anderer hydraulischer Aktuatoren verbunden sein können.

Das Gehäuse (6') hat zentral eine Öffnung, durch welche der Schaft (2') z.B. zu einem Gelenk (z.B. an einem Spiegel) führt. Dieser Schaft (2') wird zum Gehäuse (6') durch jeweils eine Dichtung (4a', 4b') oberhalb und unterhalb der Trennscheibe (3') abgedichtet.

Drückt nun der Schaft (2') nach unten, so verringert sich der Druck in der Arbeitskammer (5a') und der Druck in der Kompensationskammer (5b') erhöht sich. Durch die Zuführungs- bzw. Verbindungsleitungen (7a' bzw. 7b') strömt dann Flüssigkeit in oder aus der jeweiligen Kammer (5a', 5b') in die Vorratsbehälter (in der Figur nicht dargestellt) aus. In der Figur 2 liegt die Arbeitskammer unten und die Kompensationskammer oben.

In der Figur 1 ist nun die erfindungsgemäße Lagerzelle (1) dargestellt. Diese Lagerzelle (1) hat die Arbeitskammer (5a) oben und die Kompensationskammer (5b) unten. Zu beiden Kammern (5a, 5b) führt jeweils eine Zuführungs- bzw. Verbindungsleitung für hydraulische Flüssigkeiten (7a, 7b).

Zwischen den beiden Kammern (5a, 5b) befindet sich ein Quersteg (6a) (auch Grundplatte genannt), welcher beide Kammern (5a, 5b) starr von einander trennt. Dieser Steg (6a) ist Teil des Gehäuses (6).

In der oberen Kammer, der Arbeitskammer (5a), ist ein Kolben (3a) angebracht, welcher mit einer ringförmigen Dichtung (4a) die Flüssigkeit in der Arbeitskammer (5a) von der Außenwelt abtrennt. Auf dem Kolben (3a) ist ein Schaft (2) z.B. zu einem Gelenk an einem Spiegel (in der Figur nicht dargestellt) befestigt.

Auch auf der Kompensationskammer (5b) befindet sich ein Kolben (3b), welcher seinerseits zusammen mit einer kreisringförmigen Dichtung (4b) die Flüssigkeit in der Kompensationskammer (5b) von der Außenwelt abtrennt.

Beide Kolben (3a, 3b) sind durch eine starre Brücke (9) miteinander verbunden, so daß die Bewegung des oberen Kolbens (3a) auf den unteren Kolben (3b) übertragen wird.

Drückt nun der Schaft (2) den oberen Kolben (3a) nach unten, so verringert sich das Volumen der Arbeitskammer (5a) und Flüssigkeit strömt aus dem Zuführungs- bzw. Verbindungsleitung (7a) nach außen in einen Vorratsbehälter (in der Figur nicht dargestellt).

Andererseits wird die Bewegung des Schaftes (2) auf die Kompensationskammer (5b) durch die Brücke (9) auf den unteren Kolben (3b) übertragen, so daß sich das Volumen in der Kompensationskammer (5b) vergrößert und Flüssigkeit durch die Zuführungs- bzw. Verbindungsleitung (7b) aus einem Vorratsbehälter (in der Figur nicht dargestellt) in die Kompensationskammer (5b) fließt.

Die Wirkungsweise der Lagerzelle als solche ist z.B. in der EP 0 270 967 beschrieben.

Der Vorteil der erfindungsgemäßen Lösung besteht darin, daß auf die Dichtung (8 in Figur 2) zwischen den beiden Kammern (5a und 5b bzw. 5a'und 5b') verzichtet werden kann. Damit wird eine Dichtung (8) eingespart, wobei der hydraulische Querschnitt beider Kammern (5a, 5b) der Lagerzelle (1) exakt identisch bleibt.

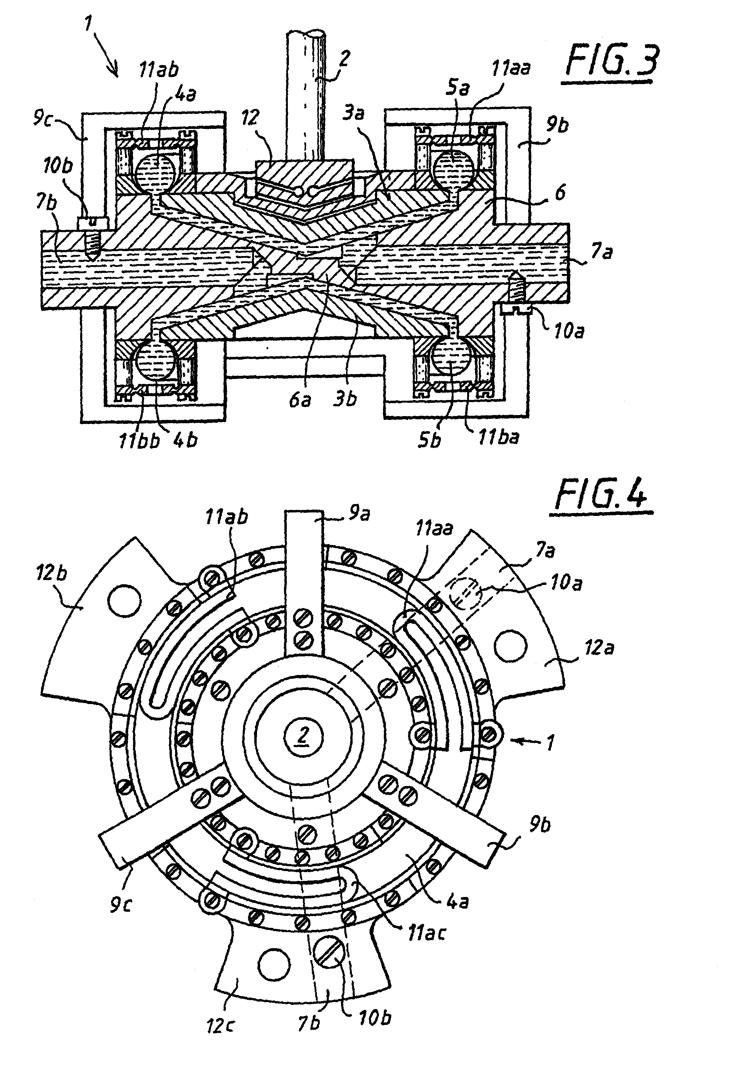

In der Figur 3 ist nun eine erfindungsgemäße Lagerzelle (1) an einem Ausführungsbeispiel dargestellt. Die Figur 4 zeigt dabei eine Aufsicht auf die in Figur 3 dargestellte Lagerzelle.

Die Lagerzelle (1) besitzt eine Arbeitskammer (5a) und eine Hydrostatik-Kompensatorkammer (5b). Beide Kammern (5a, 5b) besitzen keinen (hydrostatischen) "direkten Kontakt" zueinander und sind lediglich durch drei starre Verbindungsbrücken (9a, 9b und 9c) (bewegungsmäßig) starr miteinander gekoppelt, wobei die Verbindungsbrücken (9a, 9b und 9c) an den beiden Kolben (3a, 3b) angreifen.

Zu jeder Kammer (5a, 5b) führt jeweils eine Zuführungs- bzw. Verbindungsleitung (7a, 7b) von einem Vorratsbehälter (in der Figur nicht dargestellt) für hydraulische Flüssigkeiten. In den als Zuführungs- bzw. Verbindungsleitungen (7a, 7b) dienenden Rohrleitungen ist jeweils eine Entlüftungsschraube (10a, 10b) angebracht, durch welche, nach der Öffnung der Schraube (10a, 10b), die jeweilige Kammer (5a, 5b) entlüftet werden kann.

Das Gehäuse (6) der Lagerungszelle (1) weist ein starres Mittelteil (6a) auf, welches die beiden Kammern (5a, 5b) voneinander trennt. Außer dem Gehäuse (6) besitzt die Arbeitskammer (5a) als äußeren Abschluß einen oberen Kolben (3a), welcher über eine seitliche Dichtung (4a) mit dem Gehäuse (6) verbunden ist.

An dem oberen Kolben (3a) ist über ein Gelenk mit orthogonalen Achsen, welches als Festkörpergelenk (12) ausgeführt ist und aus gekreuzten Blattfedern besteht, ein Schaft (2) angebracht, welcher zu einem Gelenk an einer Lagerstelle an einem astronomischen Spiegel (in der Figur nicht dargestellt) führt. Die Dichtung (4a) ist konstruktiv als Omega-Torus ausgeführt.

Auch die Kompensationskammer (5b) besitzt als äußeren Abschluß einen unteren Kolben (3b), welcher über eine seitliche Dichtung (4b) mit dem Gehäuse (6) verbunden ist. Die Dichtung (4b) ist auch hier konstruktiv als Omega-Torus ausgeführt.

Oberhalb der Dichtungen (4a, 4b) sind jeweils drei Blattfedern (llaa, 11ab, 11ac; 11ba, 11bb, 11bc) angeordnet.

Zur sicheren Befestigung der Lagerzelle (1) an einer Basis (in der Figur nicht dargestellt), befinden sich am Gehäuse (6) drei seitliche Befestigungskörper (12a, 12b und 12c).

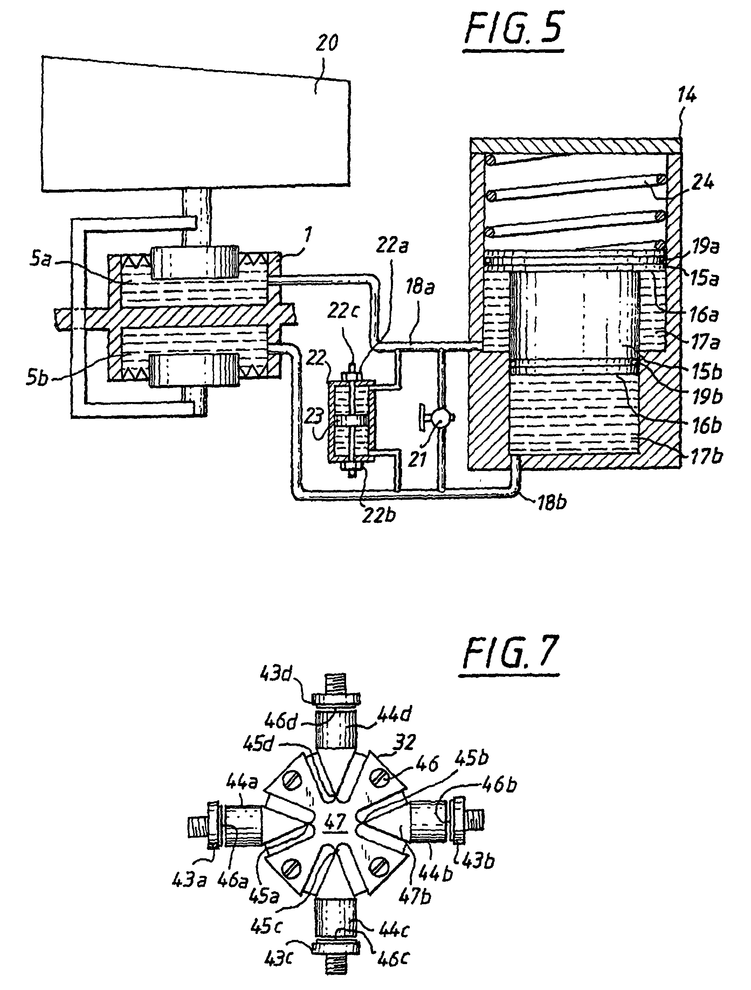

In einem ersten Anwendungsbeispiel soll nun der Einsatz von Lagerzellen mit einer Thermalkompensation beschrieben werden. Die hier in Figur 5 dargestellte erfinderische Lösung ermöglicht es, das ohnehin vorhandene Ausgleichssystem für den hydrostatischen Druck gleichzeitig zum Ausgleich der Volumenänderung des Öls in der Arbeitskammer (5a) der Lagerzelle (1) des hydraulischen Systems zu verwenden. Die erfinderische Lösung kann dabei zusammen mit einer Lagerzelle nach Figur 1 oder 2 verwendet werden.

Das System erhält in einer thermischen Kompensationszelle (14) zwei verbundene Kolben (15a, 15b), (statt des einen in der üblichen Anordnung) deren wirksame Flächen (16a, 16b) einander gleich sind. Hydraulisch werden beide Kammern (17a, 17b) nach Figur 5 so mit der hydraulischen Lagerzelle (1) verbunden, daß beide Kammern (17a, 17b) sich bei der Temperaturänderung des Öls um den gleichen Betrag vergrößern, sofern auch die Ölmenge im Arbeitskreis (18a) gleich der Ölmenge im Kompensationskreis (18b) ist. Dichtungen (19a, 19b) sorgen dabei für eine sichere Trennung der beiden Ausgleichskammern (17a, 17b) bzw. verhindern das Austreten von Flüssigkeit aus der oberen Kammer (17a).

Das System wirkt wie folgt: Die Vorspannfeder (24) erzeugt in einem völlig geschlossenen System einen konstanten Vordruck, der sich auch auf die Arbeitskammer (5a) der Lagerzelle (1) überträgt, sofern die Zelle (1) unbelastet ist. Die Last des Spiegels (20) erhöht den Druck in der Arbeitszelle (5a) entsprechend dem Spiegelgewicht. Die Gesamtmenge des im Arbeitskreis (18a) eingeschlossenen Öls bestimmt die Position des Spiegels (20).

Erhöht sich nun infolge einer Temperaturänderung das Volumen des Öls im Arbeitskreis (18a), so erhöht sich das Ölvolumen im Kompensationskreis (18b), in welchem sich die Kompensationskammer (5b) befindet, um den gleichen Betrag, weil die Ölmengen gleich sind. Hierdurch muß sich der Ausgleichskolben (15a) um einem Betrag x anheben.

Da der Ausgleichskolben (15a) und der Vorspannkolben (15b) miteinander verbunden sind, hebt sich auch der Vorspannkolben (15b) um den Betrag x, wodurch das Volumen in der Ausgleichskammer (17b) um genau den Betrag erhöht wird, um den sich das Ölvolumen im Kompensationskreis (18b) erhöht hat. Der Spiegel (20) bleibt daher exakt an seiner Position, obwohl sich das Ölvolumen in beiden Kreisen (18a, 18b) vergrößert hat.

Die Kammern (17a, 17b) in der thermischen Kompensationszelle (14) müssen so dimensioniert werden, daß die Kreisfläche (16b) des Ausgleichskolbens (15b) gleich der Kreisringfläche (16a) des Vorspannkolbens (15a) ist, um der maximale Axialhub x dem höchsten zu erwartenden Volumenzuwachs bei Temperaturerhöhung entspricht.

Das Prinzip kann auch für verschiedene Ölvolumina in den Kreisen (18a, 18b) ausgelegt werden und für verschiedene Arbeitsmedien, doch das erschwert die gleichzeitige Nutzung als hydrostatisches Kompensationssystem.

Zwischen den beiden Kreisen (18a, 18b) ist noch ein Absperrventil (21) angeordnet, welches einerseits zur Füllung der beiden Kreise (18a, 18b) mit einer hydraulischen Flüssigkeit dient und andererseits eine Grobverstellung zwischen den beiden Kreisen (18a, 18b) ermöglicht.

Außerdem ist zwischen den beiden Kreisen (18a, 18b) noch ein Justierkolben (22) angeordnet, mit welchem eine Feinverstellung vorgenommen werden kann.

Zur Feinverstellung wird eine der beiden Feststellschrauben (22a, 22b) an dem Haltestab (22c) der Trennscheibe (23) zwischen den beiden Kammern des Justierkolbens (22) gelockert und die andere Feststellschraube (22a, 22b) festgezogen. Dazu besitzt der Haltestab (22c) an seinen beiden Enden jeweils ein Außengewinde, welcher dem Innengewinde der Schauben (22a, 22b) als Führung dient.

Die obigen Ausführungen zum Thermalkompensationsystem dienen lediglich zur Erläuterung des Prinzips. Die konkrete Ausgestaltung der Systembaugruppen kann dabei im Rahmen des Standes der Technik unterschiedlich sein.

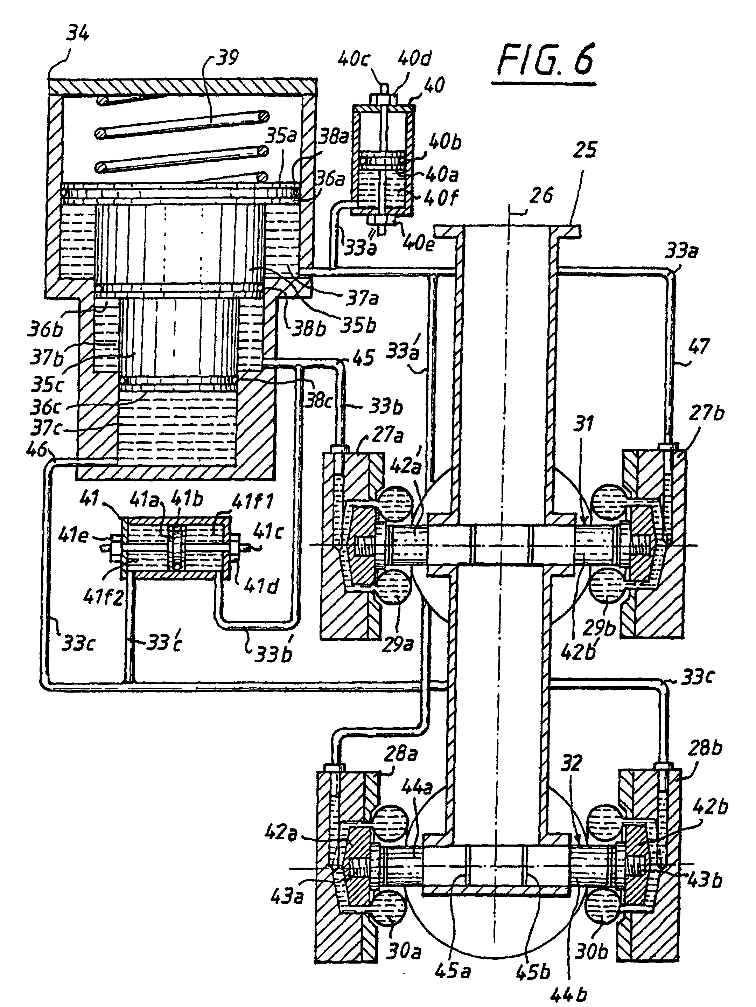

In einem weiteren Anwendungsbeispiel soll nun der Einsatz der Lagerzellen als Laterallagerung beschrieben werden. Die in der Figur 6 dargestellte erfinderische Lösung erlaubt es, den Umlenkhebel (25) durch hydraulische Zellen (27a - 27d, 28a - 28d) so zu lagern, daß seine Bewegung parallel zu sich selbst erfolgen kann und das mittlere Gelenk dadurch entfallen kann. Es wird sozusagen durch vier in einer Ebene angeordnete zusätzliche Hydraulikaktuatoren (27a - 27d) ersetzt. Dadurch erhält man eine hydraulische Laterallagerung als Parallelführung.

Die Figur 6 zeigt eine solche Aktuator-Anordnung an einem Umlenkhebel (25). In jeder der beiden lateralen Richtungen wirken zwei mal vier in jeweils einer Ebene angeordnete Zellen (27a - 27d, 28a - 28d, wobei im dargestellten Schnitt der Figur 6 jeweils nur zwei Zellen sichtbar sind) vorzugsweise im Abstand der Spiegelzellendicke auf den Hebel (25), welche einen Aufbau haben wie eine Halbzelle (Arbeits- oder Kompensationszelle) der in Figur 3 dargestellten Lagerzelle (1) .

Die beiden dargestellten Zellen (27b, 28a) rechts oben und links unten sind direkt miteinander verbunden, wodurch ein Parallelablauf des Hebels (25) erzwungen wird, solange sich das Ölvolumen im Justierkolben (40) für Balkenkippung nicht ändert.

Der Justierkolben (40) dient zur Einstellung der Balkenkippung und besitzt eine mit der hydraulischen Flüssigkeit gefüllte Kammer (40f). Will man das Volumen der Kammer (40f) verändern, so lockert man eine der an der Kolbenstange (40c) mit Außengewinde an ihren Enden angebrachten Schrauben (40d oder 40e) mit Innengewinde und zieht die andere Schaube (40e oder 40d) an. Dadurch verschiebt sich der Kolben (40a), um welchen eine Dichtung (40b) angebracht ist, um einen unbeabsichtigten Flüssigkeitsaustritt zu verhindern.

Erhöht man also mit diesem Kolben (40) das Ölvolumen, so kippt der Balken (25) nach links bzw. umgekehrt. Eine laterale Last auf den Balken (25) in Höhe der Wirkungslinie (26) erzeugt etwa die doppelte Aktuatorkraft im oberen Kreuz, wie im unteren wirkt.

Zwischen den beiden unteren Kammern (37b, 37c) des Temperaturkompensators (34) ist zusätzlich noch eine hydraulische wirkende Lateraljustierung (41) angebracht. Mit dieser Lateraljustierung (41) kann man den Balken (25) in einer Achse (in der Figur in der Zeichenebene senkrecht zur Wirkungslinie (26)) verschieben.

Die Lateraljustierung (41) besitzt zwei Kammern (41f1, 41f2), zwischen welchen ein an einer Kolbenstange (41c) befestigter verschiebbarer Kolben (41a) angebracht ist. Die Enden der Kolbenstange (41c) besitzen ein Außengewinde, auf welchem zwei Schrauben (41d, 41e) mit Innengewinde aufgeschraubt sind. Will man die Stellung des Kolbens (41b) in der Lateraljustierung (41) verändern, so löst man eine der beiden Schrauben (41d, 41e) und zieht die gegenüberliegende Schraube (41e, 41d) an.

In allen vier dargestellten Zellen (27a, 27b, 28a, 28b) mit Torusmembrane (29a, 29b, 30a, 30b) stellt sich selbsttätig eine Druckänderung ein, die der äußeren Kraft das Gleichgewicht hält. Die maximale äußere Kraft wird durch die Höhe der Vorspannung im Temperaturkompensator (34) bestimmt, was als Maximalkraftbegrenzung ausgelegt werden kann.

Der Temperaturkompensator (34) ist so aufgebaut, daß der untere und der mittlere Kolben (35a, 35b) die gleiche Fläche (36a, 36b) haben, aber der obere Kolben (35c) die doppelte Fläche (36c), da dieser auch die doppelte Anzahl von Aktuatorkammern kompensieren muß. Um die Kolben (35a - c) sind Dichtungen (38a - c) angebracht, um die drei hydraulischen Kreise (45, 46, 47) voneinander zu trennen und Flüssigkeitsaustritte zu verhindern.

Der obere hydraulische Kreis (47) besteht aus der oberen Kammer (37a) des Temperaturkompensators (34), dem Justierkolben (40) für die Kippung des Balkens (25), der rechten Zelle (27b) am oberen Gelenkkörper (31), der linken Zelle (28a) am unteren Gelenkkörper (32) sowie den dazugehörigen Verbindungsleitungen (33a, 33a', 33a'').

Der mittlere hydraulische Kreis (45) besteht aus der mittleren Kammer (37b) des Temperaturkompensators (34), der linken Zelle (27a) am oberen Gelenkkörper (31) sowie den dazugehörigen Verbindungsleitungen (33b, 33b'). Über die Lateraljustierung (41) hat er eine Verbindung zum unteren hydraulischen Kreis (46), welcher aus der unteren Kammer (37c) des Temperaturkompensators (34), der rechten Zelle (28b) am unteren Gelenkkörper (32) sowie den dazugehörigen Verbindungsleitungen (33c, 33c') besteht.

Das Kammervolumen der unteren und mittleren Kammer (37c und 37b) sind gleich groß, während das Volumen der oberen Kammer (37a) doppelt so groß ist wie das Volumen jeder einzelnen der beiden anderen Kammern (37b, 37c). Alle Kolben (35a - c) sind miteinander starr verbunden und werden durch eine einzige Vorspannfeder (39) belastet.

Jede der Kammern (36a - 36c) des Kompensators (34) kann gerade so viel Öl aufnehmen, wie im dazugehörigen Wirkungskreis (45 - 47) bei Temperaturerhöhung verdrängt wird. Bei richtiger Abstimmung der Ölmenge bleibt die Lage des Hebels (25) bei Temperaturänderung völlig unverändert, wogegen sich die drei Ausgleichskolben (35a - 35c) gemeinsam um den gleichen Betrag verschieben.

Die Ausführungsform der Anschlüsse der dargestellten vier Aktuatoren (27a, 27b, 28a, 28b) in den beiden Kreuzen ist so gewählt, daß alle Kolben über eine Druckstange bzw. einen Gelenkkörper (31, 32) mit jeweils zwei Gelenken mit dem Balken (25) verbunden sind (siehe auch Figur 7). Dadurch können in einer Richtung Kräfte auf den Balken (25) übertragen werden, während in der anderen der Balken (25) durch die Beweglichkeit der Gelenkkörper (31, 32) entkoppelt wird.

Für die nicht in der Figur dargestellten Ebene senkrecht zur Blattebene muß eine entsprechendes System mit eigenem Temperaturkompensator, Balkenkippung-Justierung und Lateraljustierung vorgesehen werden, um den Balken (25) auch in der anderen Achse kippen bzw. parallelverschieben zu können.

Eine vollständige Spiegellagerung für einen Hauptspiegel eines Spiegelteleskops in lateraler Richtung kann aus mehreren Hebeln (25) in einer Parallelschaltung bestehen, wobei die Summe aller Lateralbewegungen der Hebel (25) konstant bleibt. Ebenso bleibt in der Parallelschaltung auch die summe der Kippungen aller Hebel (25) konstant, wodurch die Spiegellast sich gleichmäßig auf alle Hebel (25) verteilt.

Das Temperaturkompensationselement (34) ist in jedem Ölkreis (Freiheitsgrad) einmal erforderlich, also insgesamt sechs mal, drei für die Axiallagerung und drei für die Laterallagerung. (Zwei orthogonale Richtungen und Torsion durch Zweiteilung einer Richtung).

Der in der Figur 7 dargestellte untere Gelenkkörper (32) ist genauso aufgebaut wie der obere Gelenkkörper (31) und auch entsprechend mit den jeweiligen Aktuatoren (27a, 27b, 28a, 28b) verbunden.

Der Gelenkkörper (32) besitzt in Aufsicht eine kreuzförmige Gestalt. An den Kreuzenden sind Halterungen (43a - d) angebracht, mit welchen der Gelenkkörper (32) fest mit der beweglichen Platte (42a - d) der Aktuatoren (28a - d) verbunden wird.

Über ein Festkörpergelenk (46a - d) sind diese Halterungen (43a - d) mit einem Zwischenkörper (44a - d) verbunden. Ein weiteres Festkörpergelenk (45a - d) verbindet die Zwischenkörper (44a - d) auf der gegenüberliegenden Seite mit der Grundplatte (47) des Gelenkkörpers (32).

Die Grundplatte (47) ist so gestaltet, daß seitliche Bewegungen der Zwischenkörpers (44a - d) in einem begrenzten Winkelbereich möglich sind, bevor es zum Anschlag der Zwischenkörper (44a - d) an die korrespondierende Fläche an der Grundplatte (47) kommt. Der Abstand zwischen den Halterungen (43a - d) und den Zwischenkörper (44a - d) ist so bemessen, das im festgelegten Winkelbereich eine ungestörte Bewegung der Zwischenkörper (44a - d) möglich ist.

Durch die konstruktive Gestaltung des Gelenkkörpers (32) ist eine reibungsfreie Lagerung und Halterung des Balkens (25) sichergestellt. Durch die Form der Gelenke (46a - d sowie 45a - d), welche parallel zur Wirkungslinie (26) steif sind, ist eine relativ hohe Tragfestigkeit des Balkens (25) sichergestellt.

## Patentansprüche

1. Hydraulische Lagerzelle mit einer Arbeitskammer (5a) und einer Kompensationskammer (5b) und mit einer thermischen Kompensationszelle (14), wobei eine Volumenänderung des Hydraulikmediums in der Arbeitskammer und der Kompensationskammer durch eine Bewegung von Kolben in der Kompensationszelle (14) kompensiert wird, **dadurch gekennzeichnet, daß** die Kompensationszelle zwei Kammern (17a, 17b) aufweist, daß die Arbeitskammer (5a) der hydraulischen Lagerzelle mit einer Kammer (17a) der thermischen Kompensationszelle und die Kompensationskammer (5b) der hydraulischen Lagerzelle mit der anderen Kammer (17b) der thermischen Kompensationszelle hydraulisch verbunden sind, und daß auf die beiden Kammern (17a, 17b) zwei starr miteinander verbundene Kolben (15a, 15b) mit gleichen hydraulisch wirksamen Flächen drückend sind.

2. Hydraulische Lagerzelle nach Anspruch 1, wobei die wirksame Fläche des einen Kolbens (15b) der thermischen Kompensationszelle eine Kreisfläche und die wirksame Fläche des anderen Kolbens (15a) der thermischen Kompensationszelle eine Kreisringfläche ist.

3. Hydraulische Lagerzelle nach Anspruch 1 oder 2, wobei eine Feder (24) zur Erzeugung eines definierten Kolbendruckes in der thermischen Kompensationszelle vorgesehen ist.

4. Hydraulische Lagerzelle mit einer Arbeitskammer (5a) und einer Kompensationskammer (5b), die spiegelbildlich zueinander angeordnet sind und deren hydraulischer Querschnitt übereinstimmend ist und die zum Ausgleich des hydrostalischen Druckes über Verbindungsleitungen (7a, 7b) mit Vorratshehältern für das hydraulische Medium verbunden sind, **dadurch gekennzeichnet, daß** die Vorratsbehälter zwei Kammern einer thermischen Kompensationszelle sind, auf die zwei start miteinander verbundene Kolben mit gleichen hydraulischen Flächen drückend wirken, und daß in der Arbeitskammer (5a) und in der Kompensationskammer (5b) spiegelbildlich zu einer Mittenehene zwischen beiden Kammern (5a, 5b) jeweils ein Kolben (3a, 3b) mit der gleichen hydraulischen Wirkfläche vorgesehen ist, die jeweils zusammen mit Dichtungen die Arbeitskammer (5a) und die Kompensationskammer (5b) nach außen hin abschließen, wobei diese beiden Kolben (3a, 3b) außerhalb der Kammern starr miteinander verbunden sind und die Kammern (5a, 5b) auf der diesen Kolben (3a, 3b) gegenüberliegenden Seite jeweils eine odor eine gemeinsame starre Grundplatte (6a) aufweisen.

5. Hydraulische Lagerzelle nach Anspruch 4, **dadurch gekennzeichnet, daß** die Dichtungen (4a, 4b) der Arbeits- und der Kompensationskammer (5a, 5b) torusförmig sind.

6. Hydraulische Lagerzelle nach Anspruch 5, **dadurch gekennzeichnet, daß** die Dichtungen (4a, 4b) der Arbeits- und/oder der Kompensationskammer (5a, 5b) metallisch oder aus radial verstärktem Gummi sind.

7. Hydraulische Lagerzelle nach Anspruch 6, **dadurch gekennzeichnet, daß** die torusförmigen Dichtungen (4a, 4b) einen omegaförmigen Querschnitt aufweisen.

8. Hydraulische Lagerzelle nach einem der Ansprüche 5 - 7, **dadurch gekennzeichnet, daß** oberhalb und unterhalb der torusförmigen Dichtungen (4a, 4b) Blattfedern (11aa, 11ab, 11ac) angeordnet sind.

9. Hydraulische Lagerzelle nach einem der Ansprüche 4 - 8, **dadurch gekennzeichnet, daß** jeweils ein eigenes Entlüftungssystem (10a, 10b) für die Arbeitskammer und für die Kompensationskammer vorgesehen ist.

10. Hydraulische Lagerzelle nach einem der Ansprüche 4 - 9, **dadurch gekennzeichnet, daß** ein orthogonales, Gelenk (12) am Kolben (3a) der Arbeitskammer (5a) vorgesehen ist und daß ein Schaft (2) über das orthogonale Gelenk (12) am Kolben (3a) der Arbeitskammer aufgenommen ist.

11. Laterallagerung für einen Umlenkhebel (25) mit mindestens einer hydraulischen Lagerzelle nach einem der Ansprüche 4 - 10, wobei der Kolben (42a) der Arbeitskammer und der Kolben (42b) der Kompensationskammer auf zueinander entgegengesetzte Seiten des Umlenkhebels (25) angeordnet sind.

12. Laterallagerung nach Anspruch 11, wobei zwei hydraulische Lagerzellen jeweils aus Arbeitskammer und Kompensationskammer kreuzförmig in einer Ebene angeordnet sind.

13. Axiallagerung eines Schaftes (2) mit mindestens einer hydraulischen Lagerzelle nach einem der Ansprüche 4 - 10, wobei die Arbeitskammer (5a) und die Kompensationskammer (5b) durch eine starre Grundplatte (6a) voneinander getrennt sind und wobei außerhalb der Kammern (5a, 5b) eine Umgriffsbrücke (9) vorgesehen ist, durch die die Kolben (3a, 3b) beider Kammern miteinander verbunden sind.

## Claims

1. Hydraulic bearing cell having a working chamber (5a) and a compensation chamber (5b) and having a thermal compensation cell (14), a volumetric change in the hydraulic medium in the working chamber and the compensation chamber being compensated for by a movement of pistons in the compensation cell (14), **characterized in that** the compensation cell has two chambers (17a, 17b), **in that** the working chamber (5a) of the hydraulic bearing cell is hydraulically connected to one chamber (17a) of the thermal compensation cell and the compensation chamber (5b) of the hydraulic bearing cell is hydraulically connected to the other chamber (17b) of the thermal compensation cell, and **in that** two pistons (15a, 15b) rigidly connected to one another press with the same hydraulically effective areas on the two chambers (17a, 17b).

2. Hydraulic bearing cell according to Claim 1, the effective area of the one piston (15b) of the thermal compensation cell being a circular area, and the effective area of the other piston (15a) of the thermal compensation cell being an annular area.

3. Hydraulic bearing cell according to Claim 1 or 2, a spring (24) being provided for producing a defined piston pressure in the thermal compensation cell.

4. Hydraulic bearing cell having a working chamber (5a) and a compensation chamber (5b) which are arranged in mirror image relative to one another and whose hydraulic cross sections correspond and which, for compensating for the hydrostatic pressure, are connected via connecting lines (7a, 7b) to supply reservoirs for the hydraulic medium, **characterized in that** the supply reservoirs are two chambers of a thermal compensation cell, on which pressure is exerted by two pistons rigidly connected to one another and having the same hydraulic areas, and **in that** in each case a piston (3a, 3b) having the same hydraulic effective area is provided in the working chamber (5a) and in the compensation chamber (5b) in mirror image to a centre plane between both chambers (5a, 5b), these pistons (3a, 3b), together with seals, closing off the working chamber (5a) and the compensation chamber (5b) respectively towards the outside, these two pistons (3a, 3b) being rigidly connected to one another outside the chambers, and the chambers (5a, 5b), on the side opposite these pistons (3a, 3b), each having a rigid base plate (6a) or having a common rigid base plate (6a).

5. Hydraulic bearing cell according to Claim 4, **characterized in that** the seals (4a, 4b) of the working and compensation chambers (5a, 5b) are toroidal.

6. Hydraulic bearing cell according to Claim 5, **characterized in that** the seals (4a, 4b) of the working and/or of the compensation chamber (5a, 5b) are metallic or are made of radially reinforced rubber.

7. Hydraulic bearing cell according to Claim 6, **characterized in that** the toroidal seals (4a, 4b) have an omega-shaped cross section.

8. Hydraulic bearing cell according to one of Claims 5 to 7, **characterized in that** leaf springs (11aa, 11ab, llac) are arranged above and below the toroidal seals (4a, 4b).

9. Hydraulic bearing cell according to one of Claims 4 to 8, **characterized in that** in each case a separate vent system (10a, 10b) is provided for the working chamber and for the compensation chamber.

10. Hydraulic bearing cell according to one of Claims 4 to 9, **characterized in that** an orthogonal joint (12) is provided on the piston (3a) of the working chamber (5a), and **in that** a shaft (2) is accommodated via the orthogonal joint (12) on the piston (3a) of the working chamber.

11. Lateral bearing arrangement for a deviating lever (25), having at least one hydraulic bearing cell according to one of Claims 4 to 10, the piston (42a) of the working chamber and the piston (42b) of the compensation chamber being arranged on opposite sides of the deviating lever (25).

12. Lateral bearing arrangement according to Claim 11, with two hydraulic bearing cells, each consisting of working chamber and compensation chamber, being arranged in a cross shape in one plane.

13. Axial bearing arrangement for a shaft (2), having at least one hydraulic bearing cell according to one of Claims 4 to 10, the working chamber (5a) and the compensation chamber (5b) being separated from one another by a rigid base plate (6a), and an embracing bridge (9) being provided outside the chambers (5a, 5b), by means of which embracing bridge (9) the pistons (3a, 3b) of both chambers are connected to one another.

## Revendications

1. Cellule de stockage hydraulique avec une chambre de travail (5a) et une chambre de compensation (5b) et avec une cellule de compensation thermique (14), dans laquelle une variation de volume du fluide hydraulique dans la chambre de travail et la chambre de compensation est compensée par un mouvement de pistons dans la cellule de compensation (14), **caractérisée en ce que** la cellule de compensation présente deux chambres (17a, 17b), **en ce que** la chambre de travail (5a) de la cellule de stockage hydraulique est en liaison hydraulique avec une chambre (17a) de la cellule de compensation thermique et la chambre de compensation (5b) de la cellule de stockage hydraulique est en liaison hydraulique avec l'autre chambre (17b) de la cellule de compensation thermique, et **en ce que** deux pistons rigidement reliés l'un à l'autre (15a, 15b) exercent une pression sur les deux chambres (17a, 17b) avec des surfaces hydrauliquement actives égales.

2. Cellule de stockage hydraulique suivant la revendication 1, **caractérisée en ce que** la surface active d'un premier piston (15b) de la cellule de compensation thermique est une surface circulaire et la surface active de l'autre piston (15a) de la cellule de compensation thermique est une surface annulaire ronde.

3. Cellule de stockage hydraulique suivant la revendication 1 ou 2, dans laquelle il est prévu un ressort (24) pour la production d'une pression de piston définie dans la cellule de compensation thermique.

4. Cellule de stockage hydraulique avec une chambre de travail (5a) et une chambre de compensation (5b), qui sont disposées en position inversée l'une par rapport à l'autre et dont la section transversale hydraulique coïncide et qui sont raccordées à des réservoirs de stockage pour le fluide hydraulique par des canalisations de raccordement (7a, 7b) pour la compensation de la pression hydrostatique, **caractérisée en ce que** les réservoirs de stockage sont deux chambres d'une cellule de compensation thermique, sur lesquelles deux pistons rigidement reliés l'un à l'autre exercent une pression avec des surfaces hydrauliques égales, et **en ce qu'**il est prévu dans la chambre de travail (5a) et dans la chambre de compensation (5b), en position inversée par rapport à un plan central entre les deux chambres (5a, 5b), chaque fois un piston (3a, 3b) avec la même surface hydraulique active, qui ferment chaque fois vers l'extérieur, avec des joints d'étanchéité, la chambre de travail (5a) et la chambre de compensation (5b), ces deux pistons (3a, 3b) étant rigidement reliés l'un à l'autre à l'extérieur des chambres et les chambres (5a, 5b) présentant sur le côté opposé à ces pistons (3a, 3b) respectivement une plaque de fond rigide individuelle ou commune (6a).

5. Cellule de stockage hydraulique suivant la revendication 4, **caractérisée en ce que** les joints d'étanchéité (4a, 4b) de la chambre de travail et/ou de la chambre de compensation (5a, 5b) sont toriques.

6. Cellule de stockage hydraulique suivant la revendication 5, **caractérisée en ce que** les joints d'étanchéité (4a, 4b) de la chambre de travail et/ou de la chambre de compensation (5a, 5b) sont métalliques ou sont constitués de caoutchouc renforcé radialement.

7. Cellule de stockage hydraulique suivant la revendication 6, **caractérisée en ce que** les joints d'étanchéité toriques (4a, 4b) présentent une section transversale en forme d'oméga.

8. Cellule de stockage hydraulique suivant l'une des revendications 5 à 7, **caractérisée en ce que** des ressorts à lames (llaa, 11ab, 11ac) sont disposés au-dessus et en dessous des joints d'étanchéité toriques (4a, 4b).

9. Cellule de stockage hydraulique suivant l'une quelconque des revendications 4 à 8, **caractérisée en ce qu'**il est prévu un système propre de purge d'air (10a, 10b) respectivement pour la chambre de travail et pour la chambre de compensation.

10. Cellule de stockage hydraulique suivant l'une quelconque des revendications 4 à 9, **caractérisée en ce qu'**il est prévu une articulation orthogonale (12) sur le piston (3a) de la chambre de travail (5a) et **en ce qu'**un arbre (2) est attaché par l'articulation orthogonale (12) sur le piston (3a) de la chambre de travail.

11. Montage latéral pour un levier d'inversion (25) avec au moins une cellule de stockage hydraulique suivant l'une quelconque des revendications 4 à 10, dans lequel le piston (42a) de la chambre de travail et le piston (42b) de la chambre de compensation sont disposés sur des côtés opposés l'un à l'autre du levier d'inversion (25).

12. Montage latéral suivant la revendication 11, dans lequel deux cellules de stockage hydraulique composées chacune d'une chambre de travail et d'une chambre de compensation sont disposées en croix dans un plan.

13. Montage axial d'un arbre (2) avec au moins une cellule de stockage hydraulique suivant l'une quelconque des revendications 4 à 10, dans lequel la chambre de travail (5a) et la chambre de compensation (5b) sont séparées l'une de l'autre par une plaque de fond rigide (6a) et dans lequel il est prévu un pont de serrage (9) à l'extérieur des chambres (5a, 5b), par lequel les pistons (3a, 3b) des deux chambres sont reliés l'un à l'autre.
